# EUROPEAN PATENT APPLICATION

(11) **EP 3 020 640 A1**
(43) Date of publication of application: **18.05.2016**
(21) Application number: 14193550.2
(22) Date of filing: 17.11.2014
(51) Int. Cl.: B64F 5/00

(54) **Support trolley for supporting a door of an aircraft**

(71) Applicant: Airbus Operations GmbH, 21129 Hamburg (DE)
(72) Inventor: Noel, Mathieu, 21129 Hamburg (DE)
(74) Representative: Uexküll & Stolberg

(57) **Abstract**

A support trolley for supporting a door of an aircraft to permit working on the door comprises a frame (1) provided with rollers (4,5,6) and carrying a sub-frame (12,13,14,16) comprising at least two pairs of support bolts (30,31,32) having receiving recesses at their free ends for engagement with locking bolts of the door to be supported so that the door is supported at each lateral side by a pair of support bolts. The sub-frame is rotatable with respect to the frame about an axis of rotation which extends perpendicular with respect to the axes of the support bolts and in parallel to the support plane formed by the rollers.

## Description

The invention relates to a support trolley for supporting a door of an aircraft to permit working on the door, e.g. painting of the door.

Generally, all work including painting of the door of an aircraft is done at the plant for manufacturing such doors in which plant corresponding assembly racks are provided. However, when the door of an aircraft needs to be removed from the fuselage of the aircraft for repair and/or repainting it is difficult to position the door in the vicinity of the parked aircraft so that all areas to be worked on become accessible.

Thus, it is an object of the invention to provide for a support trolley which can support a door of an aircraft in a way that permits access to essentially all parts of the door.

To solve such problem, the trolley comprises a frame provided with rollers and carrying a sub-frame comprising at least two pairs of support bolts with recesses at their free ends for engagement with locking bolts of the door to be supported so that the door is supported at each lateral side by a pair of support bolts wherein the sub-frame is rotatable with respect to the frame about an axis of rotation which extends perpendicular with respect to the axes of the support bolts and in parallel to the support plane formed by the rollers.

As the support bolts engage with the locking bolts of the door which locking bolts form part of the mechanism for locking the closed door to the fuselage, the door is mounted on the support trolley only by engagement of the support bolts with the locking bolts so that essentially all parts of the door remain accessible for repair, repainting and the like. By rotating the sub-frame about the axis of rotation to a suitable position, all areas of the door to be worked on become accessible without requiring ladders or the like. In addition, the support trolley may be placed anywhere near the parked aircraft and can be easily moved around.

Preferably, the sub-frame can be locked in a horizontal position in which the axes of the support bolts extend in a plane parallel to the support plane formed by the rollers, and in several inclined positions.

To provide for an additional stabilization of the aircraft door mounted on the trolley in all possible positions of the sub-frame an elongated support strut may be releasably attached to the sub-frame which support strut extends in parallel to the axis of rotation and comprises positioning elements for engagement with the door. By means of these positioning elements the door is supported in addition to the engagement of the support bolts with the locking bolts in particular when the sub-frame is moved out of its horizontal position. In addition the support strut provides for a stabilization of the sub-frame against deformation due to the load of the door.

In the horizontal position of the sub-frame the elongated support strut extends preferably in a plane which extends perpendicular with respect to the support plane, i.e. the support strut is located in the middle of the sub-frame.

On the support strut at least one transverse arm may be provided which extends at both sides of the support strut and carries at least two positioning elements.

The support bolts may be movable between a released position in which the locking bolts can be brought into engagement with the support bolts, and a support position in which the support bolts are fixed to the sub-frame.

By such an arrangement the support bolts can be removed from the sub-frame and can be brought into engagement with the locking bolts of the door hanging on a crane or the like. Then the door including the support bolts can be moved to a position in which the support bolts can be fixed to the sub-frame.

The receiving recess of the support bolt is preferably arranged eccentrically or laterally offset with respect to the longitudinal axis of the support bolt.

By providing an eccentric or laterally offset arrangement of the receiving recess, the support bolt may be rotated when in engagement with the locking bolt to adapt to slight differences in position of the locking bolts on a door dependent on the overall curvature of the door. Such curvature is somewhat dependent on the position of the door on the fuselage.

In its support position each support bolt may be held by means of a releasable clamping mechanism which comprises a clamp with a pivotable clamping element and a clamping bolt.

When opening the clamp by pivoting the clamping element, the support bolt can be inserted and thereafter clamped in its support position by closing the clamping element and tightening the clamping bolt.

The support bolts may be provided on support beams which are height-adjustably mounted on the sub-frame.

To adapt to different sizes of aircraft doors, the distance between the bolts of both pairs of support bolts may be adjustable.

In one embodiment the sub-frame is mounted between supporting struts located at the ends of the frame, so that the sub-frame can be rotated by 360°. For effecting such rotation, a crank mechanism with a crank handle may be provided on one of the supporting struts at one end of the frame which crank mechanism is coupled with a shaft secured of the sub-frame coaxially with respect to the axis of rotation.

In the following the invention will be explained in more detail with respect to an embodiment shown in the drawings.
- Figs. 1 and 2: schematically show a side view and an end view of a support trolley.
- Figs. 3 and 4: show the support trolley of Figs. 1 and 2 completed by a releasable elongated support strut.
- Fig. 5: shows a support beam with a clamping mechanism for a support bolt.
- Fig. 6: shows a support bolt to be used on the support trolley according to Figs. 1 to 4.

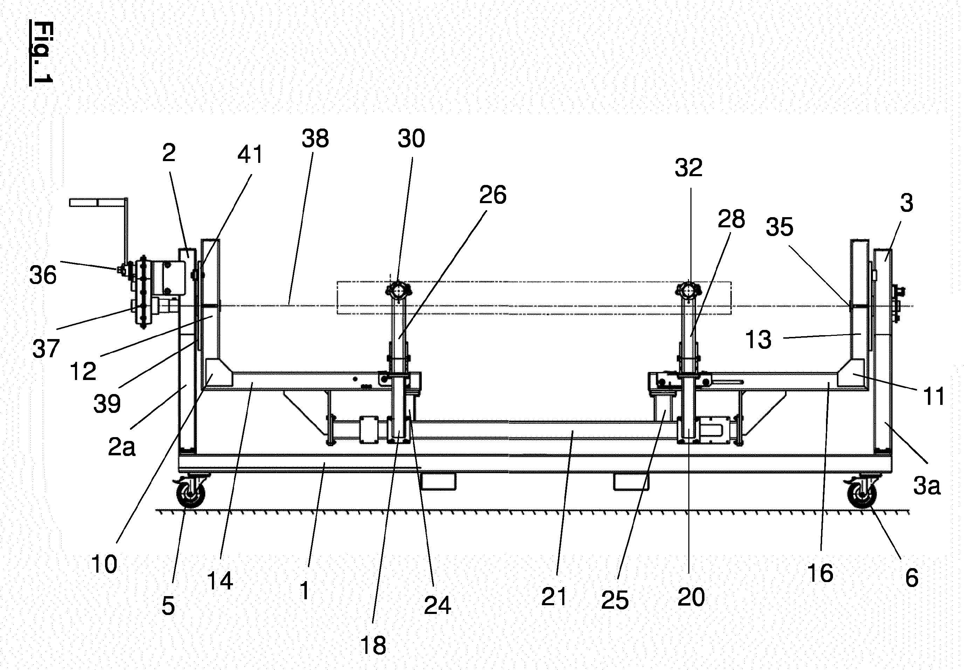

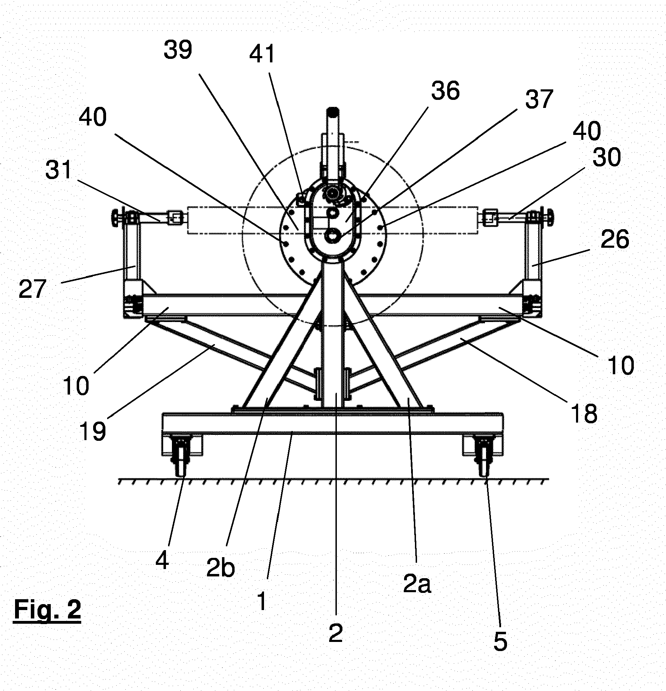

The support trolley shown in Figures 1 and 2 comprises a frame formed by a rectangular base section 1 of four elongated beams and supporting struts 2 and 3 at the opposite narrow ends of the base section 1 as well as inclined enforcement struts 2a, 2b and 3a whereas the second enforcement strut at the right hand end in Figure 1 corresponding enforcement strut 2b is not shown. Transverse enforcement beams indicated in Figure 1 but not designated and not shown in Figure 2 may be provided to enforce the base section 1. To this base section 1 lockable rollers 4, 5, 6 (the fourth roller is not shown) are attached in the corner areas of the base section 1.

A sub-frame having U-shaped frame sections 10, 14 and 11, 16 (the second leg of each frame section corresponding to leg 14 and to leg 16 is not shown) which frame sections are interconnected by means of a beam 21. This interconnection is effected by columns 24, 25 and inclined enforcement beams 18, 19 and 20 (the enforcement beam cooperating with enforcement beam 20 and corresponding to enforcement beam 19 is not shown). From the beams 10 and 11 forming the bases of the U-shaped frame sections beams 12, 13 extend upwardly. They are located in the middle of beams 10 and 11 and are coupled with supporting struts 2 and 3, on the one hand by a shaft 37 fixed to beam 12 and rotatable with respect to supporting strut 2 and on the other hand by a bolt 35 (not shown in detail) which is fixed to beam 13 and rotatably mounted in supporting strut 3. Shaft 37 and bolt 35 are arranged coaxially and form an axis of rotation 38 about which the sub-frame can be rotated by 360° with respect to the frame.

To effect such rotation a crank mechanism 36 (not shown in detail) comprising a crank handle and mounted on supporting strut 2 is coupled with the shaft 37 so that upon rotation of the crank handle the shaft 37 and thereby the sub-frame is rotated about the axis of rotation 38.

Between supporting strut 2 of the frame and beam 12 of the sub-frame a disc 39 is located with its center position on the shaft 37 and non-rotatably connected with the beam 12. The disc 39 comprises a plurality of holes 40 arranged on a circle about the axis of rotation 38.

On supporting strut 2 a plate 41 is provided which comprises a hole in a distance from the axis of rotation which distance is identical to the radius of the circle on which the holes 40 are arranged. Thus, in each rotational position of the sub-frame defined by one of the holes 40 a locking bolt can be inserted into the hole in plate 41 and a hole 40 brought in alignment therewith and thereby the sub-frame is locked in its corresponding position.

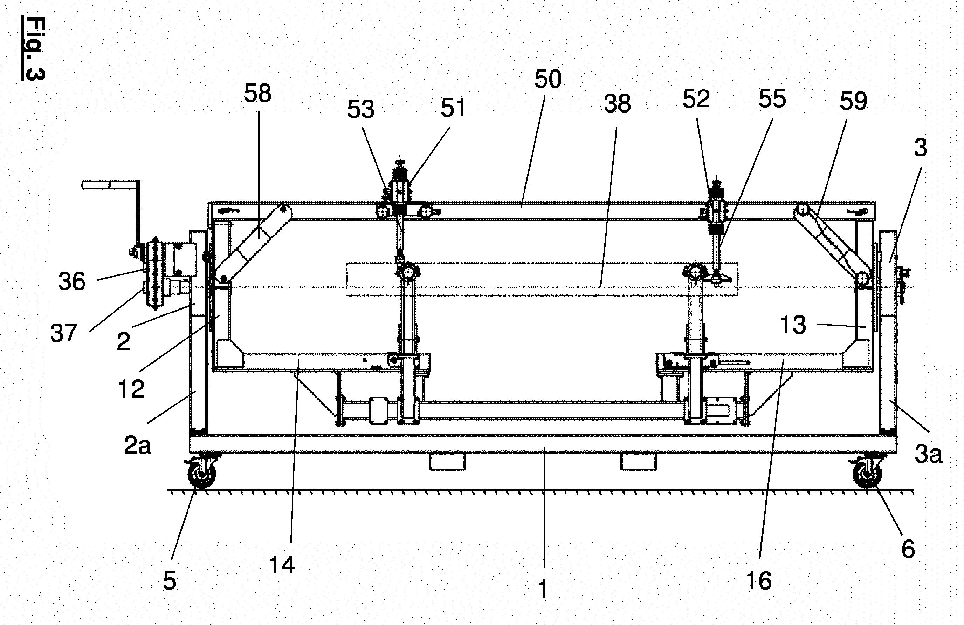

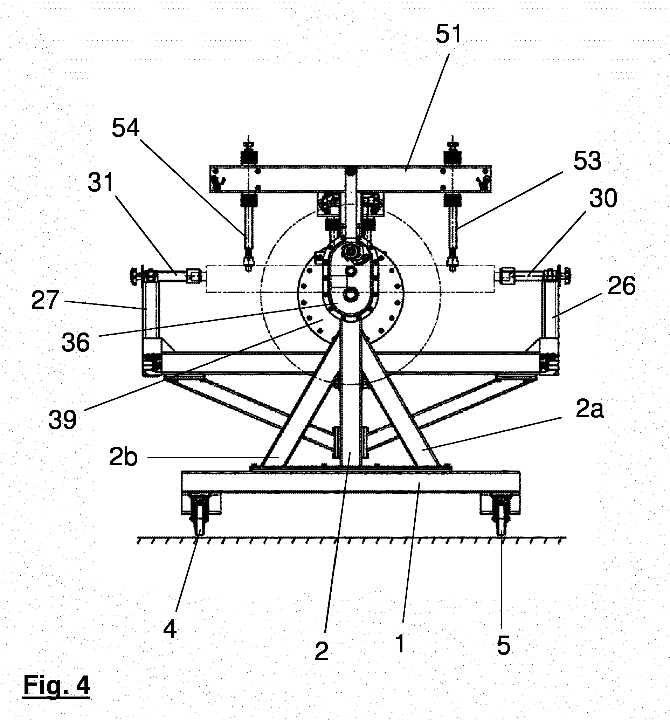

In Figs. 3 and 4 the support trolley of Figs. 1 and 2 is shown completed by a releasably mounted elongated support strut 50 which extends between beams 12 and 13 of the sub-frame and is attached to their upper ends wherein releasably mounted enforcement struts 58, 59 ensure a stable connection. The support strut 50 comprises transverse arms 51, 52 which extend to both sides of the support strut and on which engagement elements 53, 54, 55 are mounted which are height-adjustable. When an aircraft door (indicated in chain dotted lines in Figs. 1 to 4) is mounted on the support trolley the support strut 50 will be attached to the sub-frame and the engagement elements can be brought into engagement with the upper surface (in Figs. 1 to 4) of the door either in an abutting engagement or in an engagement with holes provided in the upper surface so that the aircraft door is safely held in its position when the sub-frame is rotated, e.g. by 180° from the position shown in Figs. 1 to 4.

For mounting an aircraft door on the support trolley, two pairs of support bolts 30, 32 and 31 (the second bolt of this pair is not shown in the drawings) are provided. The bolts are mounted on upstanding support beams 26, 27, 28 which are height-adjustably clamped to the legs of the U-shaped frame sections 14, 16 so that the upstanding support beams 26, 27, 28 carrying the pair of support bolts 30, 31, 32 are attached to the legs which are in alignment and therefore to one side of the sub-frame whereas the other support beams 26, 27, 28 are attached to the legs at the opposite side of the sub-frame. The support beams 26, 27, 28 are held in position by corresponding clamping mechanisms not shown in detail. The distances between the support bolts 30, 31, 32 of each pair of support bolts 30, 31, 32 can be adjusted by displacing support beam 28 and the not shown support beam of the other pair of support bolts 30, 31, 32 along slots in the legs of the U-shaped frame sections as indicated in Figs. 1 and 3. In the adjusted position these support beams 28 can be clamped to the legs with clamping means not described in detail.

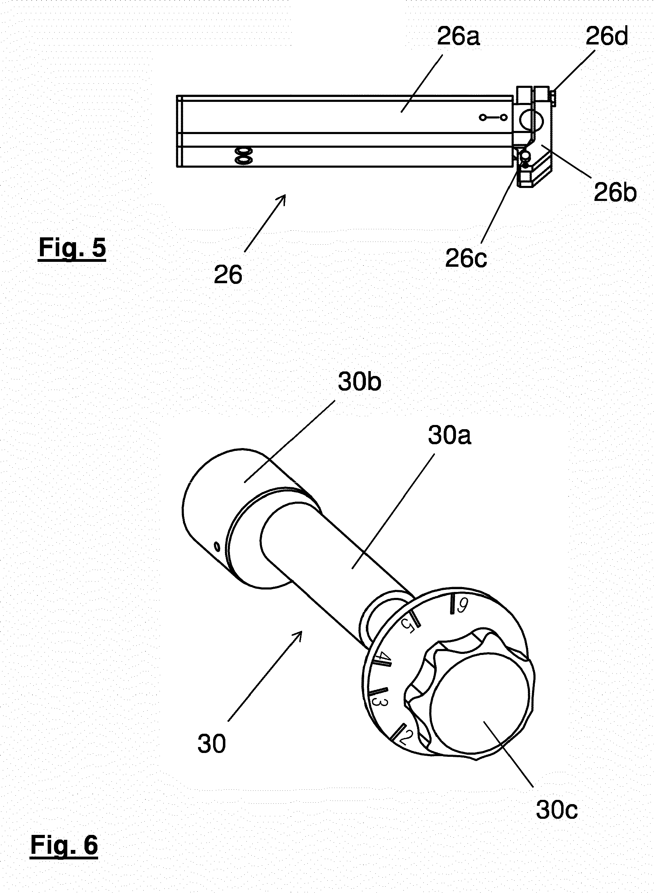

As indicated in Figure 5, the support beams (here support beam 26) comprise a clamping mechanism at the upper ends of their beam body 26a. The clamping mechanism comprises a pivotable clamping element 26b pivotable about an axis 26c so that in the closed state an essentially circular opening is provided, whereas in the open state the shaft portion 30a of a support bolt 30 (Figure 4) can be inserted. As indicated in Figs. 2 and 4, recesses are provided in the free ends of support bolts for receiving locking bolts of an aircraft door. As shown in Figure 6, the end portion of the support bolt 30b comprising the recess is arranged eccentrically or laterally offset with respect to the longitudinal axis of the shaft portion 30a. Thereby, when the support bolt 30 is inserted in the clamping mechanism of the support beam 26 and the clamping element 26b is not yet tightly clamped in engagement with the shaft portion 30a by means of the clamping bolt 26d, the support bolt 30 can be rotated by manual engagement of the knob 30c and thereby the recess can be moved to a position to compensate for slight misalignments with respect to the corresponding locking bolt of the aircraft door to be supported.

To mount an aircraft door on the support trolley, the support bolts 30, 31, 32 are removed from their clamping mechanisms and are pushed onto locking bolts of the aircraft door indicated in Figs. 2 and 4 while the door is held by a crane or the like. Then the door together with the support bolts 30, 31, 32 is moved to a position in which the support bolts 30, 31, 32 engage with the upper ends of the support beams 26, 27, 28 which have their clamping elements 26b moved to an open position. After possibly adjusting one or more of the support bolts 30, 31, 32 to compensate for slight differences in adjustment of the support bolts 30, 31, 32 with respect to the locking bolts, the clamping elements 26b are moved to the closed position and clamping is effected by tightening the corresponding bolts 26d. Thus, the aircraft door is held in position, as indicated in Figs. 1 and 2 in which position, e.g. the outer surface of the door may be repainted.

When the aircraft door is mounted as shown in Figs. 1 and 2 the elongated supporting strut 50 may be attached as described above.

## Claims

1. Support trolley for supporting a door of an aircraft to permit working on the door, e.g. painting of the door, **characterized by** a frame (1) provided with rollers (4, 5, 6) and carrying a sub-frame comprising at least two pairs of support bolts (30, 32; 31) with receiving recesses at their free ends (30b) for engagement with locking bolts of the door to be supported so that the door is supported at each lateral side by a pair of support bolts (30, 31, 32), wherein the sub-frame is rotatable with respect to the frame (1) about an axis of rotation (38) which extends perpendicular with respect to the axes of the support bolts (30, 31, 32) and in parallel to the support plane formed by said rollers (4, 5, 6).

2. Support trolley according to claim 1, **characterized in that** the sub-frame can be locked in a horizontal position in which the axes of the support bolts (30, 31, 32) extend in a plane parallel to the support plane formed by the rollers (4, 5, 6), and in several inclined positions.

3. Support trolley according to claim 1 or 2, **characterized by** an elongated support strut (50) releasably attached to the sub-frame and extending in parallel to said axis of rotation (38) which support strut (50) comprises positioning elements (53, 54, 55) for engagement with the door.

4. Support trolley according to claim 3, **characterized in that** in the horizontal position of the sub-frame said elongated support strut (50) extends in a plane which extends perpendicular with respect to said support plane.

5. Support trolley according to claim 3 or 4, **characterized in that** the elongated support strut (50) comprises at least one transverse arm (51) extending at both sides of the support strut (50) and carrying at least two positioning elements (53, 54).

6. Support trolley according to one of claims 1 to 5, **characterized in that** the support bolts (30, 31, 32) are movable between a release position in which the locking bolts can be brought in engagement with the support bolts (30, 31, 32), and a support position in which the support bolts (30, 31, 32) are fixed to said sub-frame.

7. Support trolley according to one of claims 1 to 6, **characterized in that** the receiving recess is arranged eccentrically with respect to the longitudinal axis of the support bolt (30, 31, 32).

8. Support trolley according to claim 6 or 7, **characterized in that** in its support position the support bolt (30, 31, 32) is held by means of a releasable clamping mechanism which comprise a clamp with a pivotable clamping element (26b) and a clamping bolt (26d).

9. Support trolley according to one of claims 1 to 8, **characterized in that** the support bolts (30, 31, 32) are provided on support beams (26, 27, 28) height-adjustably mounted on said sub-frame.

10. Support trolley according to one of claims 1 to 9, **characterized in that** the distance between the support bolts (30, 31, 32) of both pairs of support bolts (30, 32; 31) is adjustable.

11. Support trolley according to one of claims 1 to 10, **characterized in that** the sub-frame is mounted between supporting struts (2, 2a, 2b; 3, 3a) located at the ends of the frame (1) so that the sub-frame can be rotated by 360°.

12. Support trolley according to claim 11, **characterized in that** at the at least one supporting strut (2) at one end of the frame (1) a crank mechanism (36) with a crank handle is provided which crank mechanism (36) is coupled with a shaft (37) secured to the sub-frame coaxially with respect to said axis of rotation (38).
